# EUROPÄISCHE PATENTANMELDUNG

(11) **EP 2 615 353 A2**
(43) Veröffentlichungstag der Anmeldung: **17.07.2013**
(21) Anmeldenummer: 13150610.7
(22) Anmeldetag: 09.01.2013
(51) Int. Cl.: F16N 25/00

(54) **Verteilungselement zur Verteilung eines Öl-Luft-Gemisches**

(30) Priorität: 12.01.2012 DE 102012200380
(71) Anmelder: Aktiebolaget SKF, 41550 Göteborg (SE)
(72) Erfinder: Beck, Jens, 97688 Bad Kissingen (DE)
(74) Vertreter: Schonecke, Mitja

(57) **Zusammenfassung**

Die Erfindung betrifft ein Verteilungselement (1) zur Verteilung eines über einen Einlass (2) zugeführten Öl-Luft-Gemisches (G) auf mindestens zwei Auslässe (3, 4), wobei das Verteilungselement (1) ein Gehäuse (5) umfasst, in das an einer Stirnseite (6) in radialem Abstand zu einer Achse (a) des Gehäuses (5) eine Anzahl von Leitungen (7, 8) eingebracht sind, wobei die Leitungen (7, 8) einen ersten Leitungsabschnitt (7', 8') aufweisen, der von einer Stirnseite (6) des Gehäuses (5) in axiale Richtung (a) des Gehäuses (5) verläuft, wobei sich an den ersten Leitungsabschnitt (7', 8') ein zweiter Leitungsabschnitt (7", 8 ") anschließt, der sich zumindest teilweise radial im Gehäuse (5) erstreckt, wobei die ersten Leitungsabschnitte (7', 8') mit dem Einlass (2) verbunden sind und wobei die zweiten Leitungsabschnitte (7", 8") mit einem Auslass (3, 4) verbunden sind. Um eine möglichst homogene Verteilung des Öl-Luft-Gemisches auch die verschiedenen Auslässe zu erreichen, sieht die Erfindung vor, dass das Gehäuse (5) weiterhin eine koaxial zur Achse (a) verlaufende Fluidkammer (9) aufweist, die mit dem Einlass (2) fluidisch verbunden ist, wobei zwischen der Fluidkammer (9) und zumindest einer der Leitungen (7, 8) eine Verbindungsbohrung (10, 11) angeordnet ist.

## Beschreibung

Die Erfindung betrifft ein Verteilungselement zur Verteilung eines über einen Einlass zugeführten Öl-Luft-Gemisches auf mindestens zwei Auslässe, wobei das Verteilungselement ein Gehäuse umfasst, in das an einer Stirnseite in radialem Abstand zu einer Achse des Gehäuses eine Anzahl von Leitungen eingebracht sind, wobei die Leitungen einen ersten Leitungsabschnitt aufweisen, der von einer Stirnseite des Gehäuses in axiale Richtung des Gehäuses verläuft, wobei sich an den ersten Leitungsabschnitt ein zweiter Leitungsabschnitt anschließt, der sich zumindest teilweise radial im Gehäuse erstreckt, wobei die ersten Leitungsabschnitte mit dem Einlass fluidisch verbunden sind und wobei die zweiten Leitungsabschnitte mit jeweils einem Auslass fluidisch verbunden sind.

Verteilungselemente dieser Art sind bekannt und werden in Anlagen eingesetzt, bei denen insbesondere Lagerstellen mit einem Öl-Luft-Strom zu versorgen sind, um die Lager unter günstigen Bedingungen zu halten und so eine hohe Gebrauchsdauer zu erreichen.

Dabei wird in einem vorgeschalten Mischelement Öl in einen Luftstrom eingemischt. Diese ölbeladene Fracht wird zu dem Verteilungselement geleitet, in dem dann eine Aufteilung auf mehrere Auslässe erfolgt.

Die DE203 11 631U1 offenbart ein Verteilungselement zur Verteilung eines Öl-Luft-Gemisches, das über einen Einlass zugeführt wird, auf mindestens zwei Auslässe. Es hat ein Gehäuse, in das an einer Stirnseite von einer Achse beabstandet eine Anzahl von axial verlaufenden Leitungen eingebracht sind. Im Gehäuse ist eine Fluidkammer angeordnet, die koaxial zur Achse des Verteilungselements verläuft. Eine ähnliche Lösung zeigt die DE10 2007 019 653 A1.

Es hat sich in nachteiliger Weise ergeben, dass der Ölgehalt in der Luft in den einzelnen Auslässen keinesfalls gleich ist, sondern dass teilweise erhebliche Unterschiede im Ölanteil in der Luft bestehen. Dies führt nachteilig dazu, dass sich einmal zu viel und einmal zu wenig Ölfracht in der Luft befindet und so optimale Schmierbedingungen nicht zuverlässig aufrecht erhalten werden können.

Der Erfindung liegt die Aufgabe zugrunde, ein Verteilungselement der eingangs genannten Art so fortzubilden, dass der Ölanteil in der Luft in jedem Auslass des Verteilungselements möglichst gleich ist. Damit soll es möglich sein, einer Schmierstelle Luft zuzuführen, die eine definierte Ölfracht aufweist. Ein Aspekt ist dabei, dass die apparative Ausgestaltung des Verteilungselements in einfacher und kostengünstiger Weise umsetzbar sein soll.

Die Lösung dieser Aufgabe durch die Erfindung ist dadurch gekennzeichnet, dass das Gehäuse weiterhin eine koaxial zur Achse verlaufende Fluidkammer aufweist, die mit dem Einlass fluidisch verbunden ist, wobei zwischen der Fluidkammer und zumindest einer der Leitungen eine Verbindungsbohrung angeordnet ist.

Die Fluidkammer ist dabei bevorzugt zylindrisch ausgebildet.

Dabei kann zwischen jeder Leitung und der Fluidkammer je eine Verbindungsbohrung angeordnet sein.

Eine Leitung kann einen minimalen Durchmesser aufweisen und eine Verbindungsbohrung einen maximalen Durchmesser, wobei der maximale Durchmesser der Verbindungsbohrung bevorzugt höchstens 70 % des minimalen Durchmessers der Leitung beträgt. Die Leitung kann insbesondere einen konstanten Durchmesser aufweisen, genauso wie die Verbindungsbohrung. Besonders bevorzugt ist vorgesehen, dass der maximale Durchmesser der Verbindungsbohrung höchstens 50 % des minimalen Durchmessers der Leitung beträgt.

Der Durchmesser der Leitung liegt bevorzugt zwischen 2 mm und 4 mm. Der Durchmesser der Verbindungsbohrung liegt vorzugsweise zwischen 1,0 mm und 1,8 mm.

Die Verbindungsbohrungen können von der Fluidkammer radial nach außen verlaufen. Sie können in diesem Falle koaxial zu den zweiten Leitungsabschnitten der Leitungen verlaufen.

Zumindest ein Teil der ersten Leitungsabschnitte erstreckt sich vorzugsweise unterschiedlich lang in axiale Richtung des Gehäuses, wobei sich die zweiten Leitungsabschnitte an den Endbereich der ersten Leitungsabschnitte anschließen.

Mit der vorgeschlagenen Lösung wird es möglich, eine genau kontrollierbare Menge Öl in der aus dem Verteilungselement austretenden Luft in jedem Auslass aufrecht zu erhalten; es wird insbesondere verhindert, dass in den verschiedenen Auslässen der Ölgehalt in der Luft stark schwankt.

Eine sich in der dem Verteilungselement zugeführten Luft befindliche Ölschliere wird mit der vorgeschlagenen Konzeption weitgehend gleichmäßig auf alle Auslässe verteilt. Sind beispielsweise 4 Auslässe im Verteilungselement vorgesehen, weisen alle Auslässe ca. 25 % des dem Verteilungselement zugeführten Öls auf. Die Abweichungen liegen gemäß durchgeführter Versuche in einem Toleranzbereich von +/- 5 %. Bei vorbekannten Lösungen waren die festgestellten Abweichungen signifikant größer.

Bislang wurde eine Ölschliere im Inneren des Verteilungselements verwirbelt und über die Leitungsabschnitte an die Auslässe verteilt. Diese Verteilung war ungenau und willkürlich; die Ölschliere hat sich in den Verwirbelungen zu Öltropfen gesammelt und ist dann in unbeherrschbarer Weise aus einem der Auslässe und somit in nicht kontrollierbarer Menge entwichen.

Bei der vorgeschlagenen Lösung wird der dem Verteilungselement zugeführte Luftstrom im Inneren der Ölschliere im Bereich der Fluidkammer verwirbelt; die Ölschliere wird zu den Auslassbohrungen direkt, ohne Verwirbelung, geführt. Die gestaute Druckluft in der Fluidkammer unterstützt die gleichmäßige Verteilung und den Transport der Ölschliere in die Zuführungsbohrungen.

Somit wird die Ölschliere gezielt an der Wandung im Inneren des Verteilungselements in gleichen Teilen zu den Zuführungsbohrungen geführt. Durch die Luftsäule in der Fluidkammer wird die Ölschliere mittels des Rückstaus in die Zuführungsbohrungen gedrückt. Die relativ klein gehaltenen Verbindungsbohrungen bilden Supportbohrungen aus der Fluidkammer zu den Auslässen und unterstützen das Weiterleiten der Ölschliere in die Auslässe. Die meist größeren Leitungsabschnitte, die Zuführungsbohrungen zu den Auslässen bilden, gleichen die schwankenden Gegendrücke der unterschiedlich tiefen Bohrungen aus.

Derartige Systeme werden beispielsweise in der Stahlindustrie (in Walzwerkstraßen) bzw. bei der Produktion von Metallprodukten benötigt.

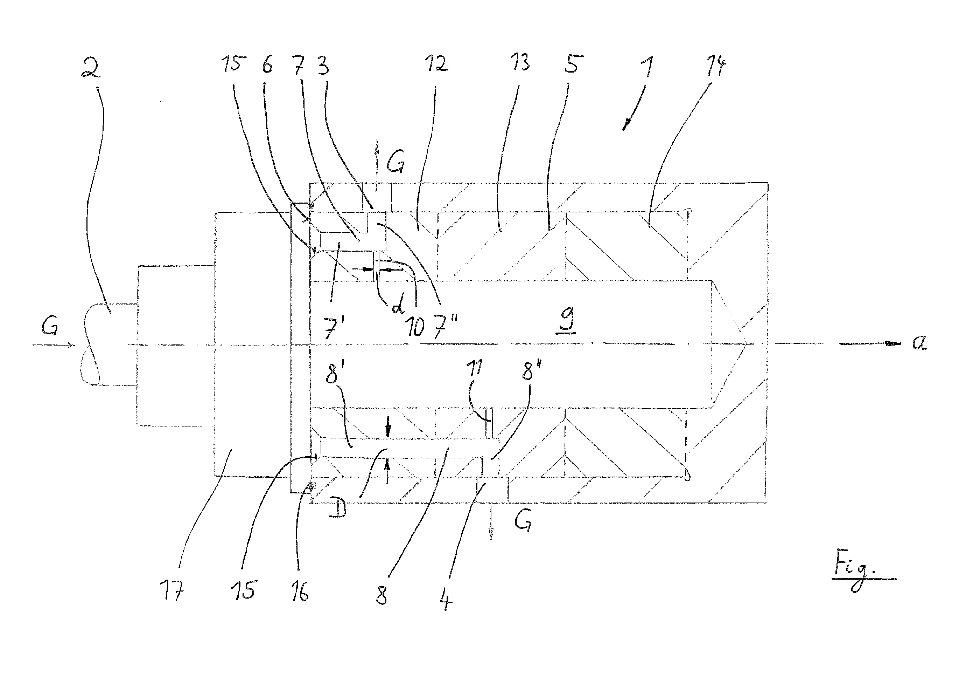

In der Zeichnung ist ein Ausführungsbeispiel der Erfindung dargestellt. Die einzige Figur zeigt einen Schnitt durch ein Verteilungselement, mit dem zugeführte ölbeladene Luft auf mehrere Auslässe gleichmäßig verteilt werden kann.

In der Figur ist ein Verteilungselement 1 zu sehen, das blockförmig (quaderförmig) ausgeführt sein kann. Es hat eine Achse a, entlang derer es sich erstreckt. In das Verteilungselement 1 wird an einem Einlass 2 ein Öl-Luft-Gemisch G zugeführt, das aus einer (nicht dargestellten) Mischkammer stammt, in der Öl in Luft eingemischt wurde. Im Verteilungselement 1 geht es nunmehr darum, das Öl-Luft-Gemisch G (das mit einem Druck von bis zu 6 bar anliegt) auf eine Anzahl von Auslässen 3, 4 zu verteilen, wobei zwei dieser Auslässe dargestellt sind; es können auch mehr als zwei Auslässe, z. B. 4, 6 oder 8 Auslässe, vorgesehen werden. Ziel ist es dabei, den Ölanteil in jedem Auslass 3, 4 möglichst gleich hoch zu halten. Bei beispielsweise zwei Auslässen wird so eine Verteilung von jeweils 50 % der Ölfracht angestrebt, entsprechend bei beispielsweise vier Auslässen eine Verteilung von jeweils 25 %.

Das Verteilungselement 1 weist ein Gehäuse 5 auf, das sich entlang der Achse a erstreckt. Bestandteil des Gehäuses 5 sind im Ausführungsbeispiel mehrere Verteilungsscheiben 12, 13 und 14, wobei hier nur exemplarisch drei solcher Scheiben dargestellt sind. Jede Scheibe weist ein System von Bohrungen auf, so dass - nach der Montage der Scheiben 12, 13, 14 in das Gehäuse 5 - Leitungen gebildet werden, von denen zwei, nämlich die Leitungen 7 und 8, dargestellt sind. Die Leitungen 7, 8 erstrecken sich von einer Stirnseite 6 des Gehäuses 5 zunächst in axialer Richtung a, und zwar exzentrisch zur Achse a, und bilden hier einen ersten Leitungsabschnitt 7' bzw. 8`. Am axialen Ende des ersten Leitungsabschnitts 7', 8' schließt sich ein zweiter Leitungsabschnitt 7" bzw. 8" an. Die zweiten Leitungsabschnitte 7", 8" münden in jeweilige Auslässe 3 bzw. 4, wie es in der Figur zu sehen ist.

Durch Wahl einer entsprechenden Anzahl von Scheiben 12, 13, 14 ist es in konstruktiv einfacher Weise möglich, die gewünschten und benötigten Leitungen 7, 8 zwischen Einlass 2 und Auslässen 3, 4 zu realisieren.

Somit werden fluidische Verbindungen zwischen dem Einlass 2 und den Auslässen 3, 4 hergestellt. Dabei können um den Umfang des Gehäuses, d. h. um die Achse a in Umfangsrichtung umlaufend, eine Anzahl von Leitungen vorgesehen sein, deren erste Leitungsabschnitte sich unterschiedlich weit axial erstrecken und so die Verbindung zu den verschiedenen Auslässen herstellen.

Ausgehend von einer insoweit vorbekannten Bauweise eines Verteilungselements ist nunmehr des Weiteren vorgesehen, dass das Gehäuse 5 weiterhin eine koaxial zur Achse a verlaufende Fluidkammer 9 aufweist. Die Fluidkammer 9 ist vorliegend als Sackbohrung ausgebildet, die sich koaxial zur Achse a erstreckt. Die Fluidkammer 9 ist mit dem Einlass 2 fluidisch verbunden. Weiterhin ist vorgesehen, dass zwischen der Fluidkammer 9 und den Leitungen 7, 8 jeweils eine Verbindungsbohrung 10, 11 angeordnet bzw. eingebracht ist.

Diese Verbindungsbohrungen 10, 11 haben im Vergleich mit den Leitungen 7, 8 einen geringeren Durchmesser. Während der Durchmesser D der Leitungen 7, 8 bevorzugt im Bereich zwischen 3 mm und 5 mm liegt, beträgt der Durchmesser d der Verbindungsbohrungen 10, 11 nur ca. 1,2 mm bis 1,6 mm. Für den Durchmesser der vorzugsweise zylindrisch ausgebildeten Fluidkammer 9 hat sich ein Wert zwischen 7 mm und 10 mm bewährt.

In Abhängigkeit der axialen Länge der ersten Leitungsabschnitte 7', 8' kann es sinnvoll sein, mit unterschiedlichen Durchmessern zu arbeiten, gegebenenfalls auch nur für einige der zu dieser Axialposition führenden Leitungsabschnitte.

Der Übergang von der Stirnseite 6 des Gehäuses 5 in den ersten Leitungsabschnitt 7`, 8` ist mit einem Senkabschnitt 15 versehen. Der Einlass 2 ist an einem Deckelelement 17 angeordnet, das an der Stirnseite 6 des Gehäuses 5 festgelegt ist. Die Dichtigkeit des Deckelelements 17 zur Stirnseite 6 des Gehäuses 5 wird durch eine Dichtung 16 in Form eines O-Rings hergestellt.

Von den Auslässen 3, 4 wird die ölbeladene Luft zu den gewünschten Stellen geleitet, die geschmiert werden müssen.

### Bezugszeichenliste

- 1: Verteilungselement
- 2: Einlass
- 3: Auslass
- 4: Auslass
- 5: Gehäuse
- 6: Stirnseite
- 7: Leitung
- 7': erster Leitungsabschnitt
- 7": zweiter Leitungsabschnitt
- 8: Leitung
- 8': erster Leitungsabschnitt
- 8": zweiter Leitungsabschnitt
- 9: Fluidkammer
- 10: Verbindungsbohrung
- 11: Verbindungsbohrung
- 12: Verteilungsscheibe
- 13: Verteilungsscheibe
- 14: Verteilungsscheibe
- 15: Senkabschnitt
- 16: Dichtung (O-Ring)
- 17: Deckelelement

- G: Öl-Luft-Gemisch
- a: Achse des Gehäuses
- D: Durchmesser
- d: Durchmesser

## Patentansprüche

1. Verteilungselement (1) zur Verteilung eines über einen Einlass (2) zugeführten Öl-Luft-Gemisches (G) auf mindestens zwei Auslässe (3, 4), wobei das Verteilungselement (1) ein Gehäuse (5) umfasst, in das an einer Stirnseite (6) in radialem Abstand zu einer Achse (a) des Gehäuses (5) eine Anzahl von Leitungen (7, 8) eingebracht sind, wobei die Leitungen (7, 8) einen ersten Leitungsabschnitt (7', 8') aufweisen, der von einer Stirnseite (6) des Gehäuses (5) in axiale Richtung (a) des Gehäuses (5) verläuft, wobei sich an den ersten Leitungsabschnitt (7`, 8`) ein zweiter Leitungsabschnitt (7", 8 ") anschließt, der sich zumindest teilweise radial im Gehäuse (5) erstreckt, wobei die ersten Leitungsabschnitte (7`, 8`) mit dem Einlass (2) fluidisch verbunden sind und wobei die zweiten Leitungsabschnitte (7", 8") mit einem Auslass (3, 4) fluidisch verbunden sind,
**dadurch gekennzeichnet, dass**
das Gehäuse (5) weiterhin eine koaxial zur Achse (a) verlaufende Fluidkammer (9) aufweist, die mit dem Einlass (2) fluidisch verbunden ist, wobei zwischen der Fluidkammer (9) und zumindest einer der Leitungen (7, 8) eine Verbindungsbohrung (10, 11) angeordnet ist.

2. Verteilungselement nach Anspruch 1, **dadurch gekennzeichnet, dass** zwischen jeder Leitung (7, 8) und der Fluidkammer (9) je eine Verbindungsbohrung (10, 11) angeordnet ist.

3. Verteilungselement nach Anspruch 1 oder 2, **dadurch gekennzeichnet, dass** eine Leitung (7, 8) einen minimalen Durchmesser (D) aufweist und dass eine Verbindungsbohrung (10, 11) einen maximalen Durchmesser (d) aufweist, wobei der maximale Durchmesser (d) der Verbindungsbohrung (10, 11) höchstens 70 % des minimalen Durchmessers (D) der Leitung (7, 8) beträgt.

4. Verteilungselement nach Anspruch 3, **dadurch gekennzeichnet, dass** die Leitung (7, 8) einen konstanten Durchmesser (D) aufweist und dass die Verbindungsbohrung (10, 11) einen konstanten Durchmesser (d) aufweist.

5. Verteilungselement nach Anspruch 3 oder 4, **dadurch gekennzeichnet, dass** der maximale Durchmesser (d) der Verbindungsbohrung (10, 11) höchstens 50 % des minimalen Durchmessers (D) der Leitung (7, 8) beträgt.

6. Verteilungselement nach einem der Ansprüche 3 bis 5, **dadurch gekennzeichnet, dass** der Durchmesser (D) der Leitung (7, 8) zwischen 2 mm und 4 mm beträgt.

7. Verteilungselement nach einem der Ansprüche 3 bis 6, **dadurch gekennzeichnet, dass** der Durchmesser (d) der Verbindungsbohrung (10, 11) zwischen 1,0 mm und 1,8 mm beträgt.

8. Verteilungselement nach einem der Ansprüche 1 bis 7, **dadurch gekennzeichnet, dass** die Verbindungsbohrungen (10, 11) von der Fluidkammer (9) radial nach außen verlaufen.

9. Verteilungselement nach Anspruch 8, **dadurch gekennzeichnet, dass** die Verbindungsbohrungen (10, 11) koaxial zu den zweiten Leitungsabschnitten (7", 8") verlaufen.

10. Verteilungselement nach einem der Ansprüche 1 bis 9, **dadurch gekennzeichnet, dass** sich zumindest ein Teil der ersten Leitungsabschnitte (7`, 8`) unterschiedlich lang in axiale Richtung (a) des Gehäuses (5) erstrecken und die zweiten Leitungsabschnitte (7", 8") an den Endbereich der ersten Leitungsabschnitte (7`, 8`) anschließen.
